# EUROPÄISCHE PATENTSCHRIFT

(11) **EP 2 011 383 B1**
(45) Veröffentlichungstag und Bekanntmachung des Hinweises auf die Patenterteilung: **25.04.2018**
(21) Anmeldenummer: 08011643.7
(22) Anmeldetag: 26.06.2008
(51) Int. Cl.: A01D 90/04, A01F 15/10

(54) **Erntemaschine mit Schneidwerk**
Harvesting machine with cutting tool
Moissonneuse dotée d'un dispositif de coupe

(30) Priorität: 02.07.2007 DE 102007030635
(43) Veröffentlichungstag der Anmeldung: 07.01.2009
(73) Patentinhaber: Maschinenfabrik Bernard Krone GmbH, 48480 Spelle (DE)
(72) Erfinder: Krone, Bernard, Dr.Ing., 48480 Spelle (DE); Jung, Stefan, Dipl.-Ing., 48612 Horstmar (DE)

(56) Entgegenhaltungen:
- DE-C1- 19 706 429
- DE-U1- 9 308 656

## Beschreibung

Die Erfindung betrifft eine Erntemaschine zum Ernten von landwirtschaftlichem Halm- und Blattgut, vorzugsweise einen Ladewagen mit einer Aufnahmeeinrichtung zur Aufnahme von Halm- und Blattgut, einer nachgeordneten Förder- und Schneideinrichtung, welche einen Förderkanal umfasst, in dem ein mit Förderzinken bestücktes, umlaufend angetriebenes Förderaggregat mit einer Anzahl von quer zur Fahrt- und Arbeitsrichtung voneinander beabstandet angeordneten Schneidmessern zur Halmgutzerkleinerung zusammenwirkt, wobei die Schneidmesser in einem um eine horizontale Querachse schwenkbaren Messerrahmen gehaltert und über diesen von einer Schwenkeinrichtung in den Förderkanal einschwenkbar und aus diesem heraus schwenkbar sind und zumindest der Messerrahmen mit den Schneidmessern nach dem Lösen von Verbindungselementen um zumindest eine vertikale Achse seitlich aus der Erntemaschine heraus schwenkbar ist.
Erntemaschinen der oben genannten Art werden zunehmend überbetrieblich gewerblich eingesetzt, wodurch oft eine sehr gute Auslastung der Maschinen erreicht wird. Durch zusätzliche, stetig steigende zur Verfügung stehende Antriebsleistungen der Schlepper, die vorzugsweise als Zug- und Antriebsmaschinen der Erntemaschinen eingesetzt werden, steigen die Anforderungen an die Erntemaschinen insbesondere bezüglich ihrer Durchsatzleistung ebenso. Nachteilig wirkt sich diese Leistungserhöhung jedoch unter anderem auf die Standzeit der Schneidmesser aus, was häufigere Stillstandzeiten der Erntemaschine zwecks Messerwechsel oder zum Nachschleifen der Messer zur Folge hat. Um diese Ausfallzeiten möglichst gering halten zu können, wird nach Verbesserungen gesucht, die insbesondere den Messerwechsel optimieren.

So ist bereits aus der DE 38 21 717 A1 ein Ladewagen bekannt, bei dem der Messerrahmen zur besseren Zugänglichkeit um eine seitlich angeordnete, vertikale Schwenkachse verschwenkbar und auf der gegenüberliegenden Seite durch einen Schnellverschluss verriegelbar ist. Nachteilig an der offenbarten Erntemaschine wirkt sich jedoch eine fehlende Verschwenkbarkeit des Messerrahmens um eine horizontale Achse aus, weshalb in der Förderkanalwandung große Aussparungen für die seitliche Schwenkbewegung der Messer vorzusehen sind, welche die Funktion beeinträchtigen.

Die DE 197 06 429 C1 offenbart eine Schneideinrichtung für landwirtschaftliche Erntemaschinen, bei der seitlich beabstandete Schneidmesser in einem Förderkanal mit einem Förder- und Schneidrotor zusammenwirken. Eine Möglichkeit zum seitlichen Herausschwenken der Schneideinrichtung aus der Erntemaschine ist in der DE 197 06 429 C1 jedoch vorgesehen.

Bei einer weiteren Erntemaschine obiger Art, die das Deutsche Gebrauchsmuster DE 93 08 656 U1 offenbart, ist der Messerrahmen auf einer Seite in einem Schwenkteil und auf der anderen Seite in einem Verriegelungsteil um eine horizontale Querachse schwenkbar gelagert, wobei das Schwenkteil an einem Halteteil der Erntemaschine um eine vertikale Achse schwenkbar gelagert und das Verriegelungsteil auf der gegenüberliegenden Seite der Erntemaschine in einer Verriegelungsvorrichtung verriegelbar ist. Durch das Ausschwenken des Messerrahmens wird so eine gute Zugänglichkeit zu den Messern erreicht, um diese zu schleifen oder auszutauschen. Der ausgeschwenkte Messerrahmen muss aber nach dem Einschwenken wieder über an seinen äußeren Seiten angeordnete Anlenkzapfen mit in der Erntemaschine schwenkbar gelagerten hydraulischen Kolben-Zylinder-Einheiten verbunden werden, um diesen aus seiner abgeklappten Stellung wieder in die Betriebsstellung verschwenken zu können, in der die kammartig angeordneten Messer in den Förderkanal ragen. Dieses an beiden Seiten der Erntemaschine notwendige Entkoppeln und anschließende Wiederverbinden des Messerrahmens mit den Hydraulikzylindern nimmt dabei erhebliche Zeit in Anspruch, insbesondere weil die genaue Ausrichtung des Messerrahmens eine hohe Függenauigkeit verlangt.

Zur Umgehung der zuvor beschriebenen Nachteile der Erntemaschine nach dem DE 93 08 656 U1 wird in der Patentschrift DE 199 52 463 B4 eine Erntemaschine vorgeschlagen, bei der die Schwenkzylinder des Messerrahmens an einem zusätzlichen Hilfsrahmen angelenkt sind, welcher zusammen mit dem Messerrahmen als Einheit in eine seitliche Position verschwenkt werden kann. Der große Mehraufwand des zusätzlichen Hilfsrahmens verhindert jedoch nicht, dass für die Verschwenkung beidseitig der Erntemaschine Verbindungselemente manuell gelöst und wieder gekoppelt werden müssen. Das manuelle Lösen einer beidseitigen Bolzenverriegelung, wie sie in der DE 199 52 463 B4 beschrieben ist, die funktionsbedingt auch noch besonders passgenau ausgeführt ist, erfordert doch erheblichen Kraft- und Zeitaufwand. Insbesondere der Umstand, dass der Bediener dazu zumindest einmal auf die, der eigentlichen Bedienseite gegenüberliegende Maschinenseite gehen muss, ist sehr uneffektiv.

Aufgabe der Erfindung ist es, eine verbesserte Erntemaschine der eingangs angegebenen Art zu schaffen, bei der insbesondere die Bedienung des Verschwenkens einer ausschwenkbaren Einheit mit den Schneidmessern in eine Wartungsstellung mit guter Zugänglichkeit der Messer optimiert ist. Die ausschwenkbare Einheit besteht vorzugsweise nur aus dem Messerrahmen mit den darin gehalterten Schneidmessern und wird deshalb im Folgenden in dem Zusammenhang auch so bezeichnet.

Erfindungsgemäß wird diese Aufgabe durch eine Erntemaschine gemäß Anspruch 1 gelöst. In den weiteren abhängigen Ansprüchen schließen sich vorteilhafte Ausgestaltungen der Erfindung an.

Nach der Erfindung wird eine Erntemaschine, vorzugsweise Ladewagen, zum Ernten von landwirtschaftlichem Halm- und Blattgut mit einer, einer Aufnahmeeinrichtung zur Aufnahme von Halm- und Blattgut nachgeordneten Förder- und Schneideinrichtung vorgeschlagen, welche einen Förderkanal umfasst, in dem ein mit Förderzinken bestücktes, umlaufend angetriebenes Förderaggregat mit einem Schneidwerk, das einen Messerrahmen und eine Anzahl von quer zur Fahrt- und Arbeitsrichtung voneinander beabstandet angeordneten Schneidmessern umfasst, zur Halmgutzerkleinerung zusammenwirkt, wobei die Schneidmesser in dem um eine horizontale Querachse schwenkbaren Messerrahmen gehaltert und über diesen von einer Schwenkeinrichtung in den Förderkanal einschwenkbar und aus diesem herausschwenkbar sind und wobei das Schneidwerk nach dem Trennen von Verbindungselementen um zumindest eine vertikale Achse seitlich aus der Erntemaschine ausschwenkbar ist und das Trennen der für das seitliche Ausschwenken des ausschwenkbaren Schneidwerks zu trennenden Verbindungselemente zumindest teilweise fernbedient betätigbar ist und alle für das seitliche Ausschwenken des Schneidwerks notwendigen manuellen Tätigkeiten der Bedienperson von der Erntemaschinenseite aus durchführbar sind, an der das Schneidwerk nach dem Ausschwenken positioniert ist, wobei die Verbindungselemente durch Stellantriebe oder durch manuelle Fernbetätigung zumindest teilweise trennbar sind.

Die erfindungsgemäße Erntemaschine weist einen Messerrahmen auf, in dem die Schneidmesser auf mindestens einer Messerstange nebeneinander in Abständen verteilt angeordnet sind und sich durch Verschwenken des Messerrahmens um eine quer zur Fahrzeuglängsmittellinie liegende horizontale Schwenkachse in einen Förderkanal ein- und aus diesem ausschwenken lassen. Der Antrieb der Schwenkbewegung erfolgt dabei bevorzugt durch seitlich angeordnete Hydraulikzylinder, welche fernbedient vom Schlepper aus und/oder von einer Bedieneinheit direkt an der Erntemaschine betätigt werden. Um die Messer für deren Wechsel oder anderweitige Wartungsarbeiten gut zugänglich zu machen, ist der gesamte Messerrahmen mit den Messern in eine Position verlagerbar, die zumindest größtenteils außerhalb der Erntemaschine liegt. Dazu wird der Messerrahmen, wie aus dem Stand der Technik bekannt, nach dem Ausschwenken der Messer aus dem Förderkanal und dem Trennen von Verbindungen beidseitig der Erntemaschine um zumindest eine vertikale Achse in die Wartungsstellung verschwenkt. Durch die vorteilhafte Ausbildung der lösbaren Verbindungen des in die Wartungsposition ausschwenkbaren Messerrahmens der erfindungsgemäßen Erntemaschine ist es dem Bediener möglich, alle zur Verschwenkung notwendigen manuellen Tätigkeiten von der Erntemaschinenseite aus durchzuführen, an der der Messerrahmen nach dem Ausschwenken positioniert ist.

Ermöglicht wird das zum einen durch fernbedienbare Verriegelungselemente der Verbindungen und zum anderen durch die Feinjustierung des Messerrahmens, die automatisch mit dem Einschwenken des Messerrahmens in seine Betriebsstellung erfolgt, wodurch die Verbindungselemente des Messerrahmens mit einem Spiel ausführbar sind, welches ein leichtes Lösen und Verbinden zulässt. Mit der Betriebsstellung des Messerrahmens ist die an den Förderkanal angeschwenkte Stellung bezeichnet, in der die Schneidmesser zum Schneiden des Ernteguts in den Förderkanal hineinragen. Bei einer allgemein bekannten Vorwahlmöglichkeit der Schnittlänge sind das nicht zwingend alle Messer.

Wird der Messerrahmen aus der Betriebsstellung in die Außerbetriebstellung verschwenkt, verlässt er bei der erfindungsgemäßen Erntemaschine dabei gleichzeitig den Bereich seiner Feinjustierung, so das in der ausgeschwenkten Endlage der Außerbetriebstellung die Verbindungselemente das bereits erwähnte vorteilhafte Spiel aufweisen und somit leicht entkoppelt werden können. Die erfindungsgemäßen fernbedienten Verbindungselemente sind dabei in diversen Ausführungen denkbar, beispielsweise als Rastbolzen, als Klinke oder als Fallenschloss, ähnlich einem Türschloss, wobei die Entriegelung manuell vom Bediener muskelkraftbetätigt über eine mechanische Verbindung erfolgen kann. Auch sind aufwändigere Ausführungen mit elektrischen, hydraulischen oder anderweitigen Stellantrieben denkbar, aber nicht sinnvoll.

Die Verriegelung der Verbindungselemente kann beim Einschwenken automatisch einrastend oder auch zwangsbetätigt ausgeführt sein. Die Position der fernbedienten Verbindungselemente ist grundsätzlich sowohl am Grundrahmen der Erntemaschine als auch am Messerrahmen selbst möglich.

In einer besonders vorteilhaften Ausführung einer erfindungsgemäßen Erntemaschine ist an der, der Bedienseite gegenüberliegenden Maschinenseite ein federbelasteter Rastbolzen als Verbindungselement an dem Messerrahmen angeordnet, welcher über ein Seil oder eine andere mechanische Verbindung mit einem an der Bedienseite angebrachten Betätigungshebel verbunden ist, welcher in besonders vorteilhafter Ausgestaltung teleskopisch ausgeführt ist und derart angeordnet ist, dass er sowohl als Betätigungshebel für das Verbindungselement als auch als Handhebel für das Ausschwenken des Messerrahmens dient. Durch die teleskopische Ausführung werden dabei die Bedienkräfte auf ein Minimum reduziert.

Beim Herausschwenken des Messerrahmens in die Wartungsposition wird der Messerrahmen in einfachster Ausführung wie aus der DE 93 08 656 U1 bekannt, um eine seitliche vertikale Schwenkachse um mindestens annähernd 90 Grad verschwenkt. Bei Erntemaschinen mit eingeschränkten Platzverhältnissen im Schwenkbereich des Messerrahmens, beispielsweise durch die Achse der Erntemaschine, kann es notwendig sein den Messerrahmen in ebenfalls bekannter Weise an einem Schwenkhebel um zwei vertikale Achsen aus der Erntemaschine herauszuschwenken. Auch diese Ausführungsform einer Erntemaschine wird durch die Merkmale der Erfindung erheblich verbessert.

Durch die optimierte verschwenkbare Lösung des Messerrahmens der erfindungsgemäßen Erntemaschine wird eine wesentlich schnellere und leichtere Handhabung des Schwenkvorgangs des Messerrahmens ermöglicht und damit die Erntemaschine insbesondere bezüglich Bedienung und Auslastung insgesamt verbessert.

Die Erfindung wird nun anhand eines Ausführungsbeispiel näher erläutert.

In der Zeichnung zeigt:
- **Fig. 1**: einen Längsausschnitt eines Ladewagens mit einer Förder- und Schneideinrichtung in schematischer Darstellung unter Weglassung verdeckender Bauteile, wobei das Schneidwerk in der Betriebsstellung dargestellt ist;
- **Fig. 2**: eine Ansicht des Ladewagens nach Fig. 1, wobei das Schneidwerk in die Außerbetriebstellung verschwenkt dargestellt ist;
- **Fig. 3**: eine perspektivische Detailansicht auf das, in die Wartungsstellung ausgeschwenkte Schneidwerk;
- **Fig. 4**: eine weitere Detailansicht des Schneidwerks in der Wartungsstellung in einer Perspektive von schräg hinten in Fahrtrichtung gesehen.

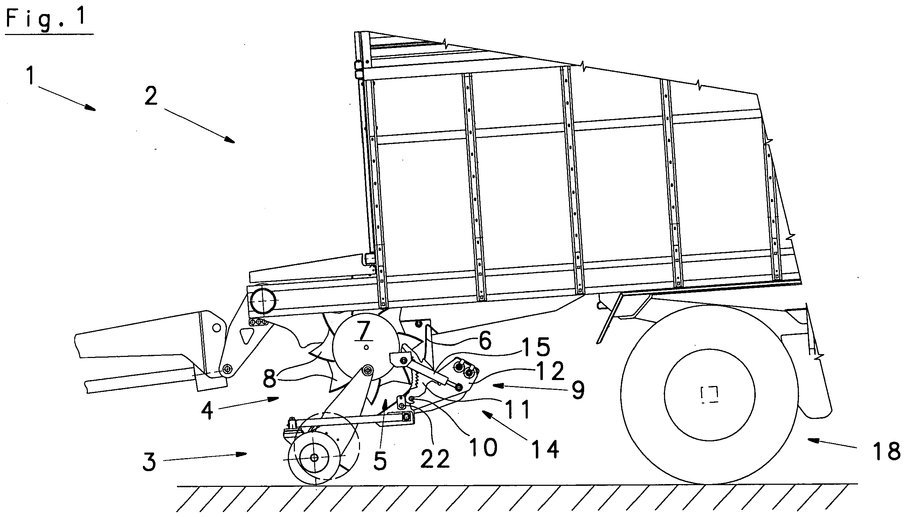

In Fig. 1 ist als Ausführungsbeispiel einer erfindungsgemäßen landwirtschaftlichen Erntemaschine 1 der vordere Teil eines Ladewagens 2 in teilweise schematischer Darstellung ersichtlich. Maschinenverkleidungen und andere verdeckende Bauteile sind zwecks besserer Erkennbarkeit erfindungsrelevanter Komponenten nicht dargestellt. Der Ladewagen 2 weist eine Aufnahmeeinrichtung 3 zur Aufnahme von am Boden liegendem Halm- und Blattgut sowie eine nachgeordnete Förder- und Schneideinrichtung 4 auf. Das vom Boden aufgenommene Erntegut wird von der Aufnahmeeinrichtung 3 an den Förderkanal 5 der Förder- und Schneideinrichtung 4 übergeben, dessen Rückwand 6 mit zueinander parallelen Schlitzen versehen ist, die in vertikalen Ebenen liegen. Die vordere Begrenzung des Förderkanals 5 wird durch die Fördertrommel 7 gebildet, die auf dem Umfang verteilt in ebenfalls vertikalen Ebenen angeordnete Förderzinken 8 aufweist, welche das Erntegut durch den Förderkanal 5 in den Aufnahmeraum des Ladewagens 2 fördern.

Hinter der mit Schlitzen versehenen Rückwand 6 des Förderkanals 5 befindet sich das Schneidwerk 9 der Förder- und Schneideinrichtung 4 mit den kammartig auf einer Messerstange 10 angeordneten Schneidmessern 11, welche in der in Fig. 1 dargestellten Betriebsstellung in den Förderkanal 5 ragen und so im Zusammenwirken mit den umlaufenden Förderzinken 8 das Erntegut im Förderkanal 5 schneiden. In weiteren erfindungsgemäßen Ausführungsformen sind auch Anordnungen der Schneidmesser 11 auf mehr als einer Messerstange 10 denkbar, wodurch dann zumindest zwei Schneidebenen gebildet werden.

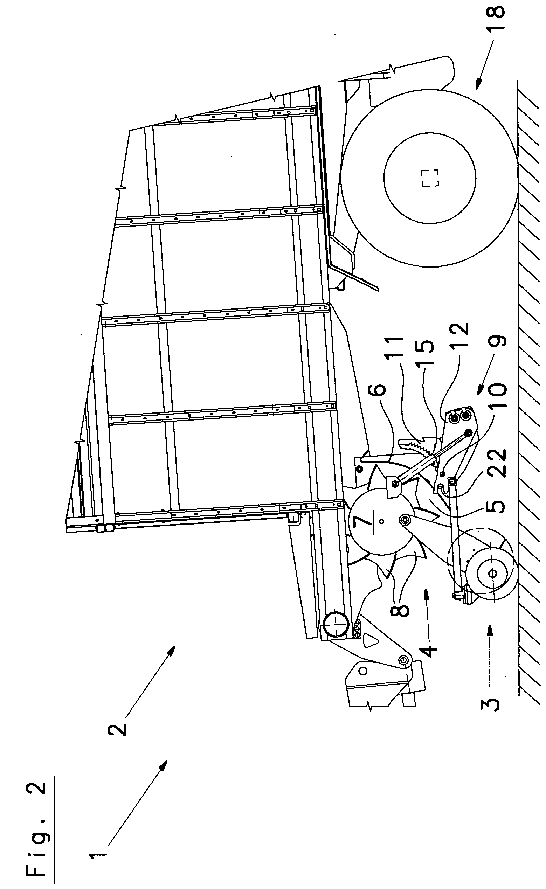

Die Messerstange 10 ist im Messerrahmen 12 des Schneidwerks 9 gehaltert, welcher um die quer zur Fahrtrichtung liegende horizontale Schwenkachse 22 mittels einer Schwenkeinrichtung 14 verschwenkbar ist. Als Antrieb der Schwenkeinrichtung 14 sind im gezeigten Ausführungsbeispiel beidseitig des Messerrahmens 12 angeordnete Hydraulikzylinder 15, 16 vorgesehen, welche den Messerrahmen 12 und damit das gesamte Schneidwerk 9 inklusive der Schneidmesser 11 von einer eingeschwenkten Betriebsstellung, wie in Fig. 1 dargestellt, in eine ausgeschwenkte Außerbetriebstellung, wie in Fig. 2 dargestellt, und umgekehrt verschwenken können. Da die Funktion des Aus- und Einschwenken des Messerrahmens auch während des Betriebes der Erntemaschine 1, beispielsweise zur Beseitigung von Erntegutstauungen im Förderkanal 5 genutzt wird, ist diese vorzugsweise vom Schlepper aus zu bedienen, wobei häufig an der Erntemaschine 1 im Bereich des Schneidwerks 9 ebenfalls eine Bedienmöglichkeit vorhanden ist.

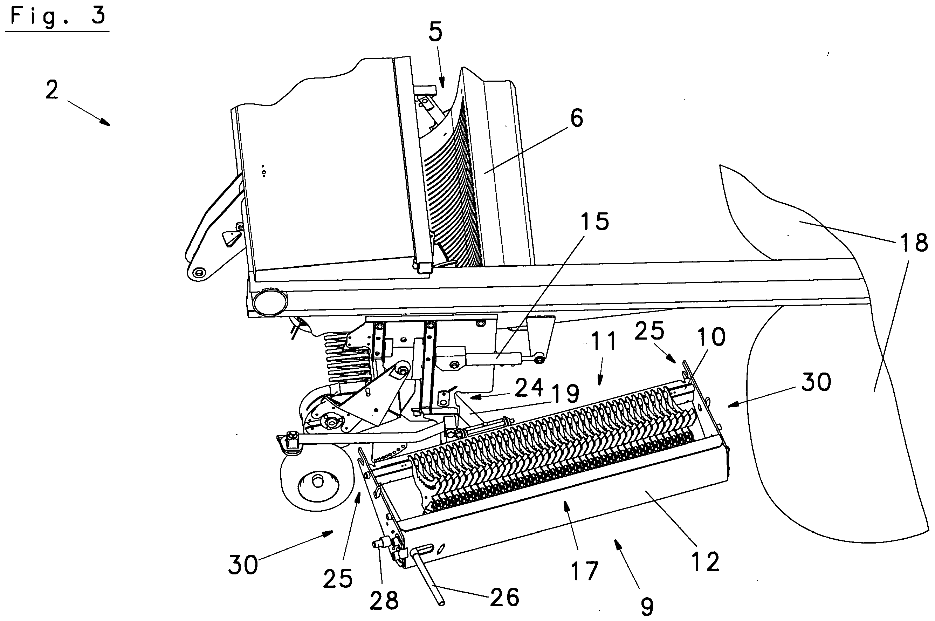

In Fig. 2 ist gut zu erkennen, dass die Schneidmesser 11 in der ausgeschwenkten Außerbetriebstellung des Schneidwerks 9 zwar frei liegen, aber ein Wechsel oder gar ein Nachschleifen der Messer 11 in dieser Position aufgrund der beengten Platzverhältnisse unterhalb des Ladewagens 2 sehr mühsam und mit erhöhtem Verletzungsrisiko verbunden ist. Bei weiteren erfindungsgemäßen Erntemaschinen wie beispielsweise Ballenpressen ist es innerhalb der Maschine praktisch ganz unmöglich. Aus diesen Gründen sind bekannte Lösungen erdacht worden, zumindest den die Schneidmesser 11 haltenden Messerrahmen 12 in eine Position außerhalb der Erntemaschine1 zu verbringen, in der die Schneidmesser 11 gefahrlos und komfortabel zugänglich sind. Bei dem Ladewagen 2 des Ausführungsbeispiels wird das Schneidwerk 9, hauptsächlich bestehend aus Messerrahmen 12, Messerstange 10, Schneidmesser 11 und einer Messerschalt- und Sicherungsvorrichtung 17, in eine Wartungsstellung verschwenkt, in der es sich überwiegend außerhalb des Ladewagens annähernd parallel zu dessen Längserstreckung befindet, wie dies aus Fig. 3 gut ersichtlich ist.

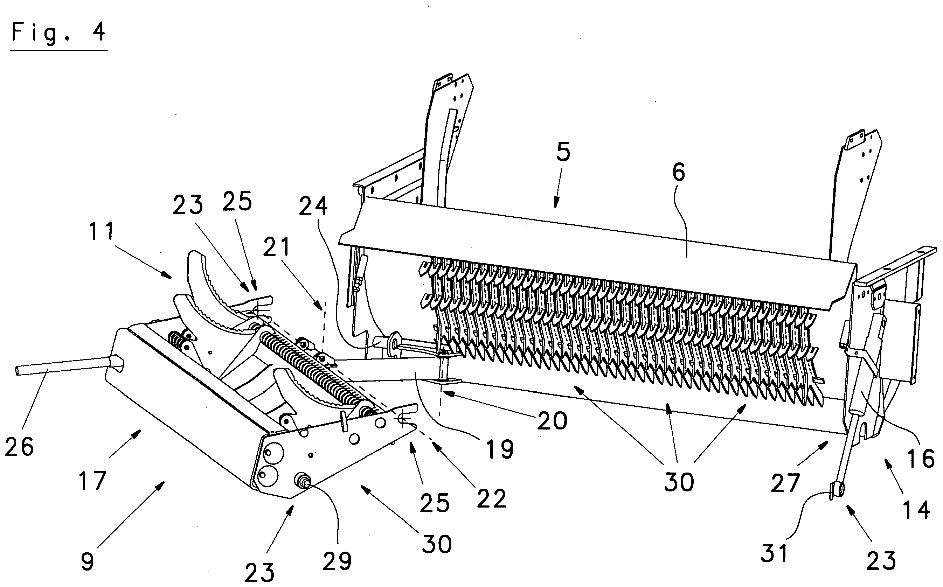

Da bei dem Ladewagen 2 des Ausführungsbeispiels der Freiraum zwischen der Förder- und Schneideinrichtung 4 und den Rädern 18 zu gering ist, kann der Messerrahmen 12 nicht in einfacher Weise um eine endseitig des Messerrahmens 12 angeordnete vertikale Achse nach außen verschwenkt werden. Zur Lösung des Problems wird der Messerrahmen12 an einem Schwenkarm 19, welcher zwischen den in Fig. 4 erkennbaren vertikalen Schwenkachsen 20, 21 angeordnet ist, getragen und auf einer Schwenkbahn geführt. Eine dem Schwenkarm 19 zugeordnete, nicht dargestellte Lenkerstrebe ist derart angeordnet, dass sie zusammen ein Viergelenk bilden, wodurch das Ausschwenken des Messerrahmens 12 für den Bediener wesentlich einfacher zu bedienen ist, da er die dadurch ständig festgelegte Ausrichtung des Messerrahmens 12 nicht steuern muss.

Vorbereitend zum Ausschwenken des Messerrahmens 12 muss dieser erst in die Außerbetriebstellung verbracht werden, um dann trennbare Verbindungen 23 der ausschwenkbaren Einheit zu den rahmenfesten Bauteilen der Erntemaschine 1 zu lösen. Im gezeigten Ausführungsbeispiel ist der Messerrahmen 12 an seiner unteren Längsseite um eine horizontale Querachse 22 verschwenkbar gelagert. Dazu sind an der Förder- und Schneideinrichtung 4 beidseitig Lagerbolzen 24 angeordnet, die erfindungsgemäß von ebenfalls beidseitig des Messerrahmens 12 angeordneten, einseitig offenen Lagerlaschen 25 verschwenkbeweglich teilweise gabelförmig umgriffen werden. Die Hydraulikzylinder 15,16 bilden die weiteren zu trennenden Verbindungen des Messerrahmens 12 zu festen Rahmenteilen des Ladewagens 2. Vorteilhaft sind die Zylinder 15, 16 mit ihrem zylinderseitigem Ende auf rahmenfesten Lagerzapfen gelagert und mit ihrem kolbenstangenseitigem Ende auf Lagerzapfen 28, 29 am Messerrahmen 12. Um das Schneidwerk 9 ausschwenken zu können, müssen nun die Verbindungen der Zylinder 15, 16 mit den Zapfen 28, 29 getrennt werden, wozu der Bediener bei einem Ladewagen nach dem Stand der Technik an beiden Maschinenseiten manuelle Tätigkeiten durchzuführen hat.

Bei dem erfindungsgemäßen Ladewagen 2 des Ausführungsbeispiels kommen jetzt die Erfindungsmerkmale besonders vorteilhaft zum Tragen, denn der Bediener ist dadurch in der Lage, alle Bedienschritte von einer Maschinenseite aus durchzuführen. Diese Bedienseite ist vorzugsweise die linke Fahrtrichtungsseite, an der sich auch der Zugang zum Schlepper befindet. Der Bediener trennt an dem in die Außerbetriebstellung verschwenkten Messerrahmen 12 den Hydraulikzylinder 15 vom Lagerzapfen 28 und verbringt ihn in eine Parkposition außerhalb des Ausschwenkbereiches, nun ergreift er den Bedienhebel 26 und bewirkt durch Zug an dem Bedienhebel 26 fernbedient das Trennen des Hydraulikzylinders 16 von dem Lagerzapfen 29, wobei der federbelastete Lagerbolzen 29 durch die mechanische Verbindung mit dem Bedienhebel 26, welche vorteilhaft durch einen Seilzug ausgeführt ist, in seine Führungshülse zurückgezogen wird und somit das kolbenstangenseitige Lagerauge des Hydraulikzylinders 16 freigibt. Weiterer Zug an dem Bedienhebel 26 in Längsrichtung des Messerrahmens 12 nach außen zum Bediener bewirkt nun durch die geschickte geometrische Anordnung des Schwenkarms 19 und dem bereits erwähntem Viergelenk, dass sich der Messerrahmen 12 von den Lagerbolzen 24 löst und in einer Bewegungsbahn nach außen in die Wartungsstellung ausschwenkt. Die vorteilhafte teleskopische Ausführung des Bedienhebels verringert durch den dadurch verlängerten Hebelarm erheblich die Bedienkräfte. Durch die erfindungsgemäße Ausführung aller lösbaren Verbindungen 23 mit besonders großem Passungsspiel wird das Trennen und ebenfalls das Zusammenfügen beim Wiedereinschwenken ebenfalls erheblich erleichtert.

Die genaue Ausrichtung des Schneidwerks 9 zur Fördereinrichtung und insbesondere dem Förderkanal 5 erfolgt erst beim Einschwenken des Messerrahmens 12 in die Betriebsstellung durch verschiedenste Anlauf- und Positionierelemente 30, die in der Endlage der Betriebsstellung den Messerrahmen 12 formschlüssig an der Kanalrückwand 6 fixieren. Durch die geschickte Ausgestaltung der Anlauf- und Positionierelemente 30 wird ermöglicht, dass die offene Lagerung des Messerrahmens 12 auf den Lagerbolzen 24 ohne zusätzliche Sicherungen auskommt, welche für das Ausschwenken dann auch noch entfernt werden müssten.

Das Wiedereinschwenken des Messerrahmens 12 aus der Wartungsstellung in die Außerbetriebstellung erfolgt ebenfalls sehr leicht und bedienerfreundlich in kürzester Zeit unter Zuhilfenahme des Bedienhebels 26, wobei der federbelastete Lagerbolzen 29 wie ein Rastbolzen durch eine Einlaufhilfe am kolbenstangenseitigen Lagerauge des Hydraulikzylinders 16 zurückweicht und in der Endlage der Einschwenkbewegung mit großzügigen Spiel in das Lagerauge einrastet, womit die Verbindung ohne Einwirkung des Bedieners wieder hergestellt ist. Durch eine Fixiereinrichtung 27, welche im Ausführungsbeispiel im Innern des Zylinders 16 zumindest in der ausgefahrenen Endlage verhindert, dass sich die Kolbenstange und damit das Lagerauge verdrehen können, werden dabei Fügprobleme vermieden. Nach dem manuelle Verbinden des Zylinders 15 mit dem Lagerzapfen 28 ist der Einschwenkvorgang bereits erledigt und das Schneidwerk wieder Betriebsbereit.

Somit wird eine Erntemaschine 1 mit einem Schneidwerk 9 bereitgestellt, welche bezüglich der Bedienung insbesondere beim Komfort und beim Zeitaufwand mit sehr einfachen Mitteln erheblich verbessert ist.

## Patentansprüche

1. Erntemaschine (1), vorzugsweise Ladewagen (2), zum Ernten von landwirtschaftlichem Halm- und Blattgut mit einer, einer Aufnahmeeinrichtung (3) zur Aufnahme von Halm- und Blattgut nachgeordneten Förder- und Schneideinrichtung (4), welche einen Förderkanal (5) umfasst, in dem ein mit Förderzinken (8) bestücktes, umlaufend angetriebenes Förderaggregat (7) mit einem Schneidwerk (9), das einen Messerrahmen (12) und eine Anzahl von quer zur Fahrt- und Arbeitsrichtung voneinander beabstandet angeordneten Schneidmessern (11) umfasst, zur Halmgutzerkleinerung zusammenwirkt, wobei die Schneidmesser (11) in dem um eine horizontale Querachse (22) schwenkbaren Messerrahmen (12) gehaltert und über diesen von einer Schwenkeinrichtung in den Förderkanal (5) einschwenkbar und aus diesem herausschwenkbar sind und wobei das Schneidwerk (9) nach dem Trennen von Verbindungselementen (23) um zumindest eine vertikale Achse seitlich aus der Erntemaschine ausschwenkbar ist, **dadurch gekennzeichnet, dass** das Trennen der für das seitliche Ausschwenken des ausschwenkbaren Schneidwerks (9) zu trennenden Verbindungselemente (23) zumindest teilweise fernbedient betätigbar ist und alle für das seitliche Ausschwenken des Schneidwerks (9) notwendigen manuellen Tätigkeiten der Bedienperson von der Erntemaschinenseite aus durchführbar sind, an der das Schneidwerk nach dem Ausschwenken positioniert ist, wobei die Verbindungselemente (23) durch Stellantriebe oder durch manuelle Fernbetätigung zumindest teilweise trennbar sind.

2. Erntemaschine nach einem oder mehreren der vorhergehenden Ansprüche, **dadurch gekennzeichnet, dass** die trennbaren Verbindungselemente (23) Bestandteil der Schwenkeinrichtung (14) sind, mit welcher die am Messerrahmen (12) gehalterten Schneidmesser (11) in den Förderkanal (5) ein- und ausschwenkbar sind.

3. Erntemaschine nach einem oder mehreren der vorhergehenden Ansprüche, **dadurch gekennzeichnet, dass** die fernbedient trennbaren Verbindungselemente (23) der Schwenkeinrichtung (14) zur Kopplungsunterstützung eine Fixiereinrichtung (27) aufweisen.

4. Erntemaschine nach Anspruch 3, **dadurch gekennzeichnet, dass** die Fixiereinrichtung (27) innerhalb eines hydraulischen Stellantriebs in dessen ausgefahrenen Endlage als Kolben-Verdrehsicherung wirkt.

5. Erntemaschine nach einem oder mehreren der vorhergehenden Ansprüche, **dadurch gekennzeichnet, dass** das Schneidwerk (9) aus einer quer zur Längsmittellinie der Erntemaschine (1) ausgerichteten Außerbetriebsstellung innerhalb der Erntemaschine (1), in der die Schneidmesser (11) aus dem Förderkanal (5) herausgeschwenkt sind, um zumindest zwei vertikale Schwenkachsen (20, 21) in eine zumindest überwiegend außerhalb der Erntemaschine (1) liegende Wartungsstellung verbringbar ist.

6. Erntemaschine nach Anspruch 5, **dadurch gekennzeichnet, dass** das Schneidwerk (9) während der Verschwenkung in die Wartungsstellung und zurück an einem zumindest einteiligen Schwenkarm (19) gehaltert ist.

7. Erntemaschine nach Anspruch 1, **dadurch gekennzeichnet, dass** die fernbediente Betätigung der trennbaren Verbindungselemente (23) mittels eines an dem ausschwenkbaren Schneidwerk (9) angeordneten Bedienhebels (26) erfolgt.

8. Erntemaschine nach Anspruch 7, **dadurch gekennzeichnet, dass** die fernbediente Betätigung der trennbaren Verbindungselemente (23) mittels eines teleskopischen Bedienhebels (26) erfolgt, welcher gleichzeitig als Schwenkgriff für die horizontale Verlagerung der ausschwenkbaren Einheit dient.

9. Erntemaschine nach einem oder mehreren der vorhergehenden Ansprüche, **dadurch gekennzeichnet, dass** die fernbedient trennbaren Verbindungselemente (23) der Förder- und Schneideinrichtung (4) selbsttätig verriegeln.

10. Erntemaschine nach einem oder mehreren der vorhergehenden Ansprüche, **dadurch gekennzeichnet, dass** das Schneidwerk (9) in seiner quer zur Längsmittellinie der Erntemaschine (1) ausgerichteten Außerbetriebstellung innerhalb der Erntemaschine, in der die Schneidmesser (11) aus dem Förderkanal (5) herausgeschwenkt sind, mit Spiel in den Verbindungselementen nur grob zum Förderkanal (5) ausgerichtet ist.

11. Erntemaschine nach Anspruch 10 **dadurch gekennzeichnet, dass** das Schneidwerk (9) während des Einschwenkens in seine Betriebsstellung mit Teilen des Förderkanals (5) eine formschlüssige Verbindung eingeht und dabei gleichzeitig feinjustiert wird.

## Claims

1. Harvester (1), preferably a forage wagon (2), for harvesting agricultural stalk and leaf crops, comprising a conveying and cutting device (4) which is arranged downstream of a receiving device (3) for receiving stalk and leaf crops and which comprises a conveying channel (5) in which a conveying unit (7), which is driven in circulation and provided with conveying tines (8), cooperates with a cutting apparatus (9), which includes a cutter frame (12) and a plurality of cutting blades (11) that are mutually spaced transversely to the travel and working direction, in order to comminute stalk crops, the cutting blades (11) being held in the cutter frame (12), which can be pivoted about a horizontal transverse axis (22), and it being possible for said blades to be pivoted over said frame by a pivoting device into the conveying channel (5), and to be pivoted thereout, and, after separating connection elements (23), it being possible for the cutting apparatus (9) to be pivoted laterally out of the harvester about at least one vertical axis, **characterised in that** the separation of the connection elements (23) to be separated for the lateral pivoting-out of the cutting apparatus (9) capable of being pivoted out is remotely controllable, at least in part, and all the manual actions by the operator that are required for the lateral pivoting-out of the cutting apparatus (9) can be carried out from the side of the harvester on which the cutting apparatus is positioned following the pivoting-out, it being possible to separate the connection elements (23), at least in part, by actuators or by manual remote control.

2. Harvester according to one or more of the preceding claims, **characterised in that** the separable connection elements (23) are a component of the pivoting device (14), by means of which the cutting blades (11) held on the cutter frame (12) can be pivoted into and out of the conveying channel (5).

3. Harvester according to one or more of the preceding claims, **characterised in that** the connection elements (23) of the pivoting device (14), which elements are separable by remote control, include a fixing device (27) for coupling support.

4. Harvester according to claim 3, **characterised in that** the fixing device (27) operates within a hydraulic actuator in the extended, end position thereof as an anti-rotation means for the piston.

5. Harvester according to one or more of the preceding claims, **characterised in that** the cutting apparatus (9) can be brought out of an idle position within the harvester (1), which position is transverse to the longitudinal centre line of the harvester (1) and in which position the cutting blades (11) are pivoted out of the conveying channel (5), and can be brought, about at least two vertical pivoting axes (20, 21), into a maintenance position that is at least primarily outside the harvester (1).

6. Harvester according to claim 5, **characterised in that** the cutting apparatus (9) is held on an at least one-part pivoting arm (19) as said apparatus pivots in and out of the maintenance position.

7. Harvester according to claim 1, **characterised in that** the remote control of the separable connection elements (23) takes place by means of a control lever (26) arranged on the cutting apparatus (9) capable of being pivoted out.

8. Harvester according to claim 7, **characterised in that** the remote control of the separable connection elements (23) takes place by means of a telescopic control lever (26), which is simultaneously used as a pivoting handle for the horizontal displacement of the unit capable of being pivoted out.

9. Harvester according to one or more of the preceding claims, **characterised in that** the connection elements (23) of the conveying and cutting device (4), which elements are separable by remote control, lock automatically.

10. Harvester according to one or more of the preceding claims, **characterised in that** the cutting apparatus (9), in the idle position thereof within the harvester (1), which position is transverse to the longitudinal centre line of the harvester and in which position the cutting blades (11) are pivoted out of the conveying channel (5), is aligned only roughly with respect to the conveying channel (5) so as to have clearance in the connection elements.

11. Harvester according to claim 10, **characterised in that** the cutting apparatus (9) becomes form-fittingly connected to parts of the conveying channel (5) as said apparatus pivots into its operating position, and in so doing is simultaneously precisely adjusted.

## Revendications

1. Moissonneuse (1), de préférence remorque autochargeuse (2) permettant de récolter des produits agricoles en tiges et en feuilles, comprenant un dispositif de transport et de coupe (4) monté en aval d'un dispositif de ramassage (3) de produits en tiges et en feuilles, qui comporte un canal de transport (5) dans lequel un ensemble de transport (7) équipé de pointes de transport (8) entraîné en rotation coopère, pour permettre de broyer les produits en tiges avec un mécanisme de coupe (9) qui comporte un châssis de lames (12) et une série de lames de coupe (11) montées transversalement à la direction de déplacement et de travail à distance les unes des autres, les lames de coupe (11) étant maintenues dans le châssis de lames (12) qui est mobile en pivotement autour d'un axe horizontal transversal (22), et pouvant être déplacé par pivotement au-dessus de ce châssis par un dispositif de pivotement pour pénétrer dans le canal de transport (5) et sortir de celui-ci, et après la séparation d'éléments de liaison (23) le mécanisme de coupe (9) pouvant pivoter autour d'au moins un axe verticale pour s'écarter latéralement de la moissonneuse,
**caractérisée en ce que**
la séparation des éléments de liaison (23) devant être séparés pour permettre le pivotement latéral du mécanisme de coupe pivotant (9) peut être au moins partiellement commandé à distance, et toutes les activités manuelles de l'utilisateur nécessaires pour le pivotement latéral du mécanisme de coupe (9) peuvent être effectuées du côté de la moissonneuse sur lequel est positionné le mécanisme de coupe après le pivotement, les éléments de liaison (23) pouvant être séparés au moins partiellement par servomoteur ou commande à distance manuelle.

2. Moissonneuse conforme à la revendication précédente,
**caractérisée en ce que**
les éléments de liaison séparables (23) sont des composants du dispositif de pivotement (14) permettant de faire pivoter les lames de coupe (11) maintenues sur le châssis de lames (12) pour les introduire dans le canal de transport (5) ou les en extraire.

3. Moissonneuse conforme à au moins l'une des revendications précédentes,
**caractérisée en ce que**
les éléments de liaison (23) séparables par commande à distance du dispositif de pivotement (14) comportent un dispositif de fixation (27) permettant d'assister le couplage.

4. Moissonneuse conforme à la revendication 3,
**caractérisée en ce que**
le dispositif de fixation (27) agit à la partie interne d'un servomoteur hydraulique dans sa position de fin de course en tant que sécurité anti-rotation de piston.

5. Moissonneuse conforme à au moins l'une des revendications précédentes,
**caractérisée en ce que**
le mécanisme de coupe (9) peut être transféré, d'une position hors service à la partie interne de la moissonneuse (1) orientée transversalement à l'axe longitudinal médian de celle-ci, dans laquelle les lames de coupe (11) sont déplacées par pivotement hors du canal de transport (5) autour d'au moins deux axes de pivotement verticaux (20, 21) dans une position de service dans lequel il est situé au moins principalement à l'extérieur de la moissonneuse (1).

6. Moissonneuse conforme à la revendication 5,
**caractérisée en ce que**
pendant le pivotement dans la position de service et inversement le mécanisme de coupe est maintenu sur un bras pivotant (19) en au moins une partie.

7. Moissonneuse conforme à la revendication 1,
**caractérisée en ce que**
l'actionnement commandé à distance des éléments de liaison séparables (23) s'effectue au moyen d'un levier de manoeuvre (26) monté sur le mécanisme de coupe pivotant (9).

8. Moissonneuse conforme à la revendication 7,
**caractérisée en ce que**
l'actionnement par commande à distance des éléments de liaison séparables (23) s'effectue au moyen d'un levier de manoeuvre télescopique (26) qui sert simultanément de poignée pivotante pour permettre le déplacement horizontal de l'unité pivotante.

9. Moissonneuse conforme à au moins l'une des revendications précédentes,
**caractérisée en ce que**
les éléments de liaison séparables (23) commandés à distance verrouillent automatiquement le dispositif de transport et de coupe (4).

10. Moissonneuse conforme à au moins l'une des revendications précédentes,
**caractérisée en ce que**
dans sa position hors service à la partie interne de la moissonneuse orientée transversalement à l'axe longitudinal médian de la moissonneuse (1), dans laquelle les lames de coupe (11) sont déplacées par pivotement hors du canal de transport, le mécanisme de coupe (9) n'est orienté que grossièrement par rapport au canal de transport (5) avec du jeu dans les éléments de liaison.

11. Moissonneuse conforme à la revendication 10,
**caractérisée en ce que**
pendant son pivotement vers sa position de service, le mécanisme de coupe (9) parvient à une liaison par la forme avec des parties du canal de transport (5) et est ainsi réglé de façon fine.
